# EUROPEAN PATENT APPLICATION

(11) **EP 1 637 733 A1**
(43) Date of publication of application: **22.03.2006**
(21) Application number: 04388063.2
(22) Date of filing: 17.09.2004
(51) Int. Cl.: F03D 9/02, F03D 9/00

(54) **A power plant, a windmill, and a method of producing electrical power from wind energy**

(71) Applicant: Elsam A/S, 7000 Fredericia (DK)
(72) Inventor: Andersen, Henning, 5500 Middelfart (DK)
(74) Representative: Nielsen, Henrik Sten

(57) **Abstract**

Power plant (10) for the generation of electrical power using wind power or wind energy, comprising a plurality of windmills (12,14,16) each comprising a mill tower, a rotor (18,20,22) with a shaft (32) being rotatably journalled in said mill tower, a fluid pressure generator (34) mounted in said mill tower and being coupled to and driven by said shaft for delivering pressurised fluid to a pressure channel (36). A pressure accumulating reservoir (42) communicates with said pressure channels for receiving said pressurised fluid therefrom, and a pressure driven electrical power generator (48) connected to said pressure accumulating reservoir is driven by said pressurised fluid for generation of electrical power. Also disclosed are a windmill for use in such a powerplant and a method of producing electrical power from wind energy.

## Description

In the modern world, the consumption of electrical power by consumer electronics and electrically driven devices in the industry is rising every year. Also, the public demand for using environmentally friendly sources of power, i.e. power plants that are not coal, oil, diesel or nuclear based, is also increasing. Examples of such power sources are windmills, water mills, solar energy plants, etc.

The use of mills or turbines has been known for centuries, e.g. windmills, wind turbines, water mills and water turbines have been used for grinding grain into flour. The basic design included a rotor driven by the wind or the water. The rotor was connected to a shaft, again connected to one or more shafts driving a grinder.

One problem with these old-fashion, and also the more modern implementations of windmills for generating electrical power, is that they are dependant on weather factors, i.e. the wind or precipitation. If the wind is too hard, the windmill needs to be slowed down by, e.g., a break. Also, the wind seldom effects the windmill at a constant power or speed, so a need for evening out the fluctuations also exists.

The basic teachings of a first aspect of the present invention provides a power plant for the generation of electrical power using wind power wind energy, that comprises:
a plurality of windmills each comprising a mill tower, a rotor with a shaft being rotatably journalled in the mill tower, a fluid pressure generator mounted in the mill tower and being coupled to and driven by the shaft for delivering pressurised fluid via a pressure channel,
a pressure accumulating reservoir communicating with the pressure channels for receiving the pressurised fluid therefrom, and
a pressure driven electrical power generator connected to the pressure accumulating reservoir and being driven by the pressurised fluid for generation of electrical power, the electrical power delivered to an electrical power supply grid.

The windmill comprises a rotor being driven by the wind in the area. The rotational energy delivered to the rotor from the wind is transported or transferred to a main shaft in the windmill. The main shaft preferably rotates at a low rotational speed. A gear may be inserted between the main shaft and a fast rotating electrical power generator delivering electrical energy or power to an electrical power supply grind.

The plurality of windmills may be replaced with a single windmill e.g. for generation of electrical power at a specific location, such as a farm or small village.

The windmills may be placed on land or in the sea, preferably so they may take advantage of a position with sufficient wind to drive the rotor. Presently, windmills produce around 2000 kW of electrical power. Developing larger windmills lead to higher towers with rotors having large or long wings.

Long wings rotating at a high velocity usually produce noise levels that are unacceptable for neighbours, which lead to limitations in the speed or velocity at which the windmills are driven. The lower number of revolutions at increased rotor diameter implies a need for a greater gear ratio in a gear means.

The size of the gears needed for such a windmill along with increased deflection of the higher windmill tower adds loads to the bearings and gear wheel.

The production of electrical energy or power from a windmill may vary substantially within a short period of time, resulting in a considerable need for regulating the rotation of the rotor, e.g. by applying a break, or distributing a plurality of windmills over a large area as it is not possible to store energy generated from a windmill. The present invention provides a pressure accumulating reservoir to accommodate this need for storing energy generated by one or more windmills.

The fluid pressure generator mounted in the mill tower pressurises the fluid so that the fluid may be transported via a pipe, tube or similar, system to an electrical power generator. However, the pressure accumulating reservoir may receive the pressurised fluid and store this fluid, thereby enabling the storage of energy, e.g. in situation where there is generated more electrical energy than needed in the electrical power supply grid.

Storage of pressurised fluid is also contemplated to diminish the effect of fluctuations in the pressure generated by the fluid pressure generator, as caused by the fluctuations in the wind.

An embodiment where the pressure accumulating reservoir is divided into two or more chambers or constituted by two or more containers or tanks, it is contemplated to be possible to utilise the pressure accumulated in one tank while filling the remaining tanks, thereby also achieving an even supply of pressurised fluid to the electrical power generator.

A first advantage of the present invention relates to the pressurised fluid being constituted by a liquid, such as seawater or freshwater including friction reducing additive or a gas, such as an inert gas, such as nitrogen or atmospheric air.

Smaller plants having a short transmission length of the fluid may use ordinary water, either saltwater or freshwater, as working medium. Pressure losses in plants may be reduced significantly by adding a friction or drag reducing additive.

A second advantage relates to the power plant according to the present invention, wherein the pressurised fluid is in a closed system including a return pump for returning the pressurised fluid from the pressure driven electrical power generator or alternatively an open system wherein the pressurised fluid is delivered to the surroundings from the pressure driven electrical power generator.

In the open system windmills and/or watermills and/or wave mills may drive pumps that are fed with water from saltwater areas, freshwater areas or brackish water areas. The water may be filtered before it is lead into a pipe system. After the water has been used for producing electrical power in the electrical power generator, the water may be returned to the surroundings, preferably, and usually, without being contaminated in the process.

The water in a closed system may be treated so that it is less corrosive to the pipe system.

In both the closed and the open system, a means for lowering the freezing point of the water may be added.

A first feature of the present invention, relates to each of the shafts of the windmills being a horizontal or vertical shaft. Alternatively a combination thereof, possibly including a gear means or coupling in-between the vertical and the horizontal shafts.

A second feature of the present invention, relates to the fluid pressure generator being a slow-moving displacement pump, preferably a membrane-piston pump.

A third feature of the present invention, relates to the fluid pressure generator being coupled to the shaft via a gear means having a conical output stage, so that the output shaft co-insides with the shaft through the housing of the windmill, and being a multi-step centrifugal pump or screw pump or Archimedean screw.

A fourth feature of the present invention, relates to the fluid pressure generator may include a valve, the valve in a closed state functioning as a break for the windmill.

When the valve is in the closed state, the rotor will be slowed down by the increased pressure in the fluid. The use of fluid as break means for the windmill is contemplated to reduce the mechanical stress induced on the gear and/or shaft during the slowing down of the rotor.

It is a first object of the present invention to provide a pressure accumulating reservoir placed in or on a central platform including the pressure driven electrical power generator.

The pressure accumulating reservoir may be placed and, at or in a central platform or area where the pressure driven, electrical power generator is also placed nearby. The size of the pressure accumulating reservoir depends on the number of windmills, water mills or submerged water mills or a generator for generating power from waves in the sea.

A fifth feature of the present invention relates to the power plant further including a multitude of pressure reservoirs positioned at or in one or more windmills.

An embodiment with two or more pressure reservoirs enables a temporary storing of the generated pressurised fluid, which may be advantageous for periods of time, where excessive pressurised fluid is generated compared to the need for using the generated pressurised fluid for the production of electrical energy. Also, the pressure reservoir may act as a buffer, as the production of pressurised fluid depends on the amount of wind, which may vary greatly within a short period of time, thereby causing fluctuations in the generation of pressurised fluid. A buffer will enable a substantially constant release of pressurised fluid from a specific windmill into the system connected to the electrical power generator. By adding a monitoring system and/or controlling system for controlling the release of pressurised fluid from the individual pressure reservoir positioned at or in one or more of the windmills, the flow of pressurised fluid into the electrical power generator may be controlled so as to generate electrical power in synchronism with electrical power generated at other electrical power plants.

A sixth feature of the present invention relates to the pressure reservoir being constituted by at least two pressure reservoirs in a series or parallel connection.

An embodiment of the pressure reservoir as constituted by two or more pressure reservoirs as constituted by two or more pressure reservoirs connected in series or parallel connections enable a distribution of the pressurised fluid generated by the windmills, e.g. one pressure reservoir may be filled with pressurised fluid from one or more windmills at the same time, at which a second pressure reservoir delivers the pressurised fluid in a controlled manner to the electrical power generator. Using multiple pressure reservoirs are contemplated to facilitate control of the pressure and/or flow of the pressurised fluid into the electrical power generator.

According to a second object of the present invention each of the multitude of pressure reservoirs may be integral with the windmill and in the form of a hydrophore in the body of the mill tower or the foundation of the windmill. Each of the hydrophores may act as an energy buffer and/or energy storage.

A seventh feature of the present invention relates to the pressure driven electrical generator being controlled with regulated number of revolutions for sustaining synchronism with the electrical grid.

The electrical generator may be controlled or regulated from an external source for ensuring that the electrical power generated by the electrical generator is in synchronism with the electrical grid to which it is connected and to which it delivers the electrical power.

An eighth feature of the present invention relates to the pressure-accumulating reservoir being further connected to at least one fluid pressure generator being coupled to wave power plants or water turbine plants.

According to a second aspect of the present invention, a windmill for use in a power plant according to the first aspect of the present invention is provided. The windmill preferably includes a mill tower, a rotor with a shaft being rotatably journalled in the mill tower, a fluid pressure generator mounted in the mill tower and being coupled to and driven by the shaft for delivering pressurised fluid via a pressure channel.

The windmill according to the second aspect of the present invention may further include any of the features according to the first aspect of the present invention.

The present invention provides a method of producing electrical power from wind energy according to a third aspect. The method comprises the steps of:
i) providing at least one windmill including a mill tower, a rotor with a shaft being rotatably journalled in the mill tower, a fluid pressure generator mounted in the mill tower and being coupled to and driven by the shaft for delivering pressurised fluid via a pressure channel, the wind energy driving the rotor,
ii) providing an electrical power generator communicating with the pressure channel,
iii) driving the electrical power generator with the pressurised fluid for the generation of electrical power,
iv) delivering the electrical power to an electrical power supply grid or an electrical power storage.

The method according to the third aspect may further comprise intermediate steps after step ii), namely:
a) providing a storage device for storing the pressurised fluid under pressure, the storage device in communication with the pressure channels and the electrical power generator, and
b) delivering the pressurised fluid to the electrical power generator.

The temporary storing of the pressurised fluid enables a buffering of the generated pressurised fluid for evening out the fluctuations in the generated pressurised fluid. The term generated pressurised fluid is to be construed as a term covering the pressurisation of fluid, and not the generation of a fluid.

The method according to the third aspect may advantageously further comprise a step of providing a monitoring means for monitoring demand for electrical power on the electrical power supply grid, performing the step b) when the monitoring means detect a specific need in the electrical power supply grid.

The monitoring means may be constituted by a computer or a plurality of computers connected in a network and include input and output means, such as screens, printers, mice, keyboards etc. The monitoring means may include automatic detection of the need for electrical power and may be connected to one or more generators for controlling the generation of electrical power.

Also the at least one windmill used in connection with the third aspect of the present invention may include any of the features of the windmill described in connection with the first aspect.

The present invention is to be described in greater detail with reference to the drawings, in which:

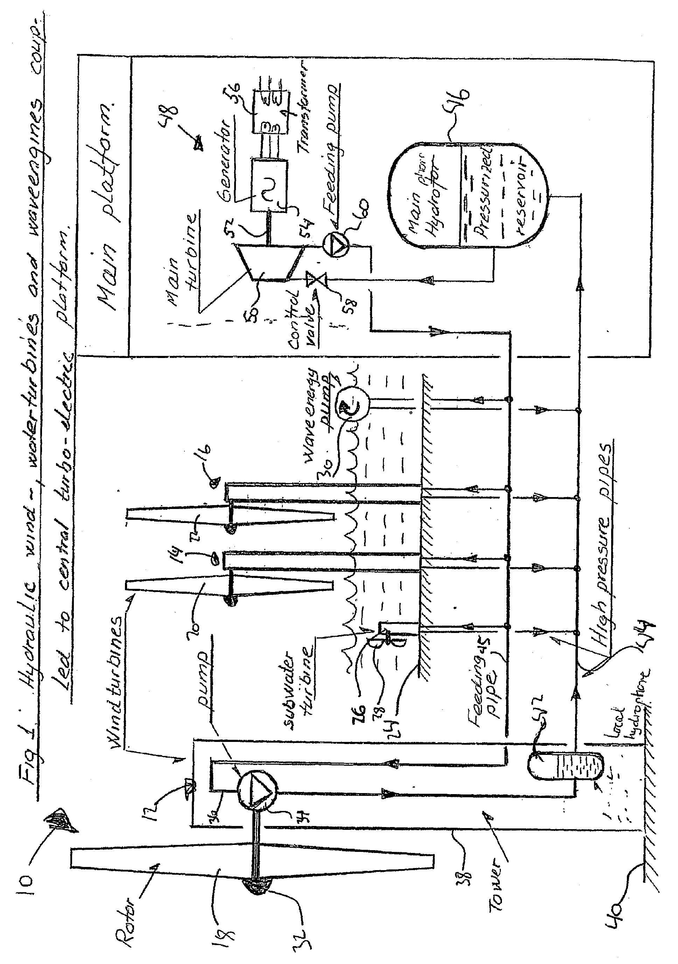

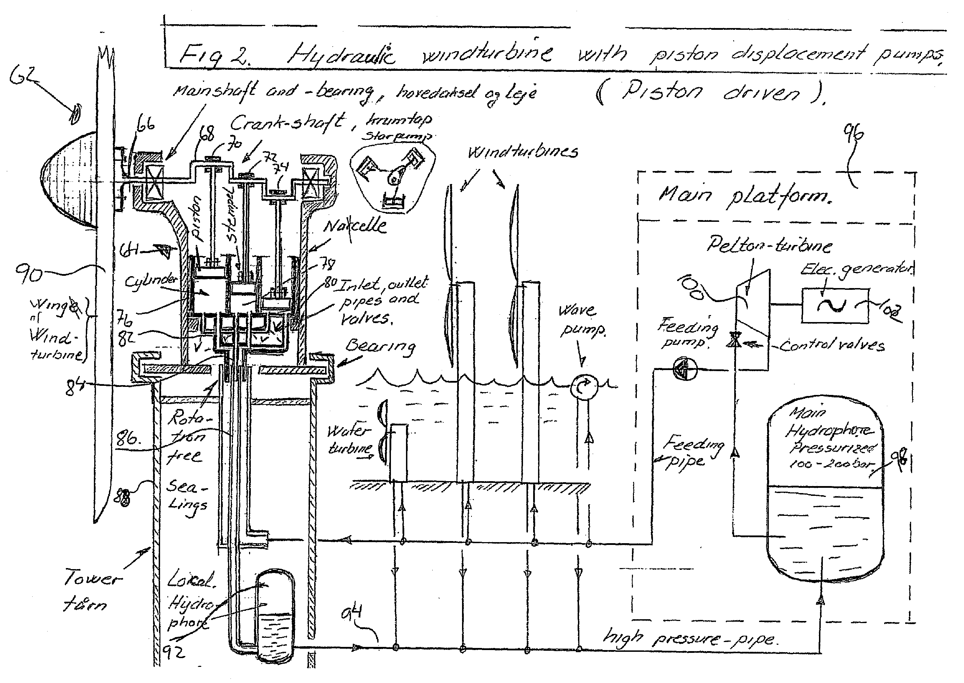

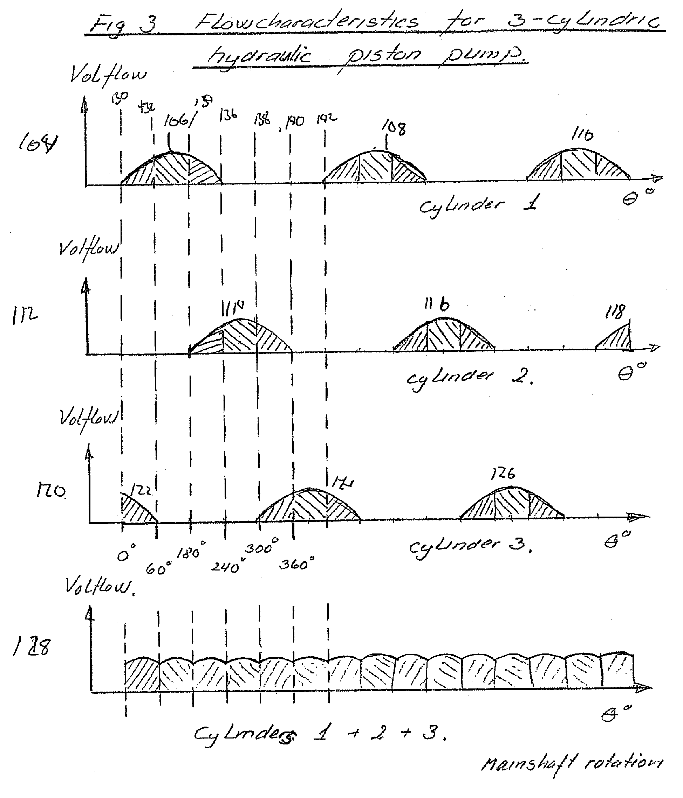

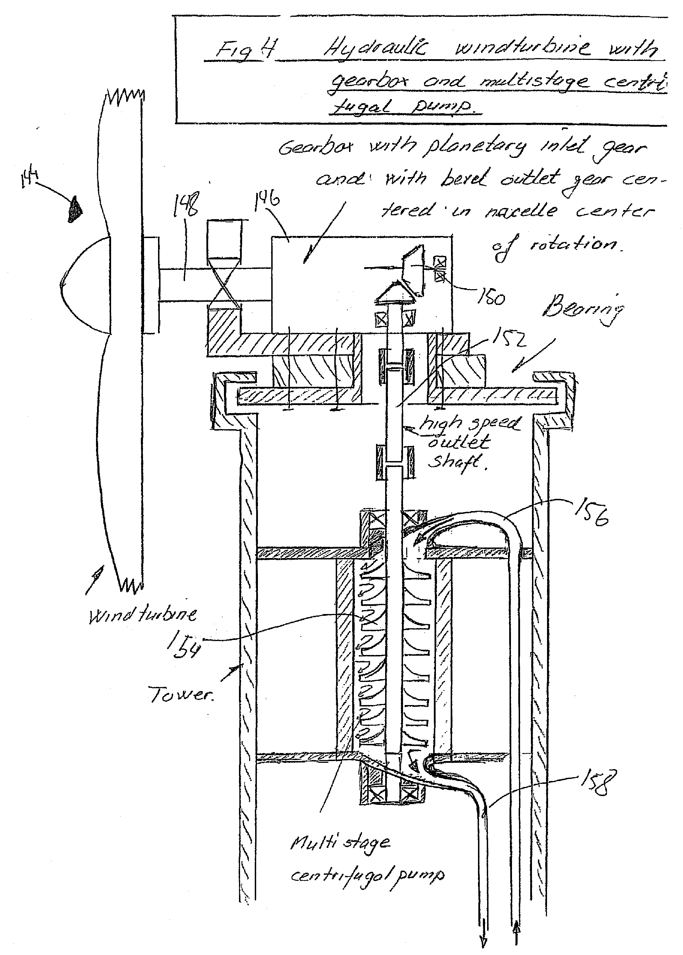

Fig. 1 is a schematic view of a power plant generally assigned the reference numeral 10 comprising three windmills 12, 14, 16, each comprising a rotor 18, 20, 22. The windmills 14 and 16 are illustrated as being placed in water and fixated on the ocean bottom 24. At the ocean bottom 24, also a sub water turbine 26 has been placed. The sub water turbine also comprises a rotor 28 suitable for placement underneath the water. Furthermore, a wave energy pump 30 is connected to the power plant 10.

The windmill 12 is illustrated in a schematic cut-through view illustrating that the rotor 18 is connected via a shaft 32 to a pump 34. The pump 34 generates the pressurised fluid received via the pipe system 36 and delivers fluid at an elevated pressure to the pipe system. The rotor 18, shaft 32 and pump 34 are placed in the mill tower 38 so that the rotor may be elevated with respect to the ground 40.

Also included in the tower 38 is a hydrophore or pressurised reservoir 42. The hydrophore or pressurised reservoir 42 may be used for compensation for the fluctuations in the pressurised fluid generated by the pump 34 in situations where the rotor 18 is influenced by changing or fluctuating winds causing the rotor 18 to rotate at non even speeds.

The pressurised fluid is delivered from the hydrophore 42 or alternatively directly from the pump 34 into a high pressure pipe system 44 receiving pressurised fluid from all of the pressure generating elements of the entire power plant 10, namely in Fig. 1 illustrated as the windmills 12, 14, 16, the sub water turbine 26 and the wave energy pump 30.

The pressurised fluid is delivered via the high pressure pipes 44 into a main hydrophore or pressurised reservoir 46 storing the pressurised fluid until it is to be delivered into an electrical power generator 48 constituted by a main turbine 50 connected via a shaft 52 to a generator 54, which is further connected to a

transformer 56 transforming the electrical power generated by the generator 54 to a level suitable for delivering the electrical power into an electrical power supply grid. A control valve 58 may be used for a safety valve or flow regulation of the pressurised fluid delivered from the pressurised reservoir 46.

A feeding pump 60 may be used for ensuring that the fluid returns from the turbine 50 is returned into the feeding pipes 45 feeding the individual components of the power plant 10, in Fig. 1 namely the windmills 12, 14, 16, the sub water turbine 26 and the wave energy pump 30.

The embodiment illustrated in Fig. 1 is a closed system, where the fluid, preferably being water, is transported within a closed pipe system, however, an embodiment with one or more water intakes, e.g. placed at the individual windmills, sub water turbines or wave energy pumps may also be envisaged. The water may be filtered prior to entering the pipe system and may, after having driven the main turbine 50 be returned into the surrounding environment, preferably without being contaminated.

The friction laws or pressure laws in the pipe system may be reduced by adding a drag reducing additive for reducing the friction or viscosity of the water. Also an additive for ensuring that the water or fluid in the pipe system is not subject to frost, i.e. an additive lowering the freezing point of the fluid may be added to the fluid.

Fig. 2 is a schematic view of a hydraulic wind turbine 62 with piston displacement pumps 64. The main shaft 66 of the wind turbine or windmill 62 is connected to a crank-shaft 68 connected to three pistons 70, 72 and 74. The pistons 70, 72, 74 reciprocates in three cylinders 76, 78, 80 for pressurising the fluid received in the inlet 82. The pressurised fluid is delivered into the outlet 84 into a pipe 86 within the tower 88 of the windmill. The coupling between the pipe 86 and the outlet 84 is a rotation free sealing coupling allowing the head or top of the windmill or wind turbine to rotate depending on the direction of the wind so as to achieve maximum speed of the rotor 90. The pipe 86 both receives the pressurised fluid from the outlet 84 and also delivers fluid to the inlet 82.

The fluid is delivered to a local hydrophore 92 before it is conducted into a high pressure pipe system 94.

In the embodiment illustrated in Fig. 2, the main platform 96 includes a main hydrophore 98 receiving the pressurised fluid from the pipe system 94. The main hydrophore 98 may store the pressurised fluid until it is needed in the turbine for the generation of electrical power. The turbine 100 in this embodiment is a pelton-turbine connected to the electric generator 102. The remaining parts of the power plant 62 may be identical to or include parts of the embodiment illustrated in Fig. 1.

Fig. 3 is a view of the flow characteristics for a 3-cylindric hydraulic piston pump, i.e. as illustrated in Fig. 2. The y axes of the chart 104, 112, 120, 128 indicates the volume flow from each of the cylinders, where cylinder 1 is illustrated in chart 104, cylinder 2 is illustrated in chart 112 and cylinder 3 is illustrated in chart 120. As the rotor rotates and thereby drives the main shaft, each of the cylinders perform a specific displacement of volume illustrated by the curves 106-126.

The vertical dotted lines 130, 132, 134, 136, 138, 140 and 142 each represent a spacing of 60 degrees of rotation of the main shaft. As the three cylinders are connected to the same output, the resulting volume flow will be as illustrated in chart 128. As can be seen from chart 128, the fluctuations in the resulting volume flow will be minimal compared to the changes in volume flow from using only one piston. The fluctuations illustrated in chart 128 will be evened out by the use of the hydrophore in the tower.

Fig. 4 is a schematic cut-through view of a windmill or wind turbine 144 illustrating a gear box 146 connecting the main shaft 148 via a gear 150 to a high speed output shaft 152 for driving a multi-stage centrifugal pump 154. The gear 150 is a traditional windmill gear having a conical shape. The centrifugal pump 154 has an inlet 156 and an output 158 for receiving and delivering the fluid, respectively.

## Claims

1. Power plant for the generation of electrical power using wind power or wind energy, comprising:
a plurality of windmills each comprising a mill tower, a rotor with a shaft being rotatably journalled in said mill tower, a fluid pressure generator mounted in said mill tower and being coupled to and driven by said shaft for delivering pressurised fluid via a pressure channel,
a pressure accumulating reservoir communicating with said pressure channels for receiving said pressurised fluid therefrom, and
a pressure driven electrical power generator connected to said pressure accumulating reservoir and being driven by said pressurised fluid for generation of electrical power, said electrical power delivered to an electrical power supply grid.

2. The power plant according to claim 1, wherein said pressurised fluid is constituted by a liquid, such as seawater or freshwater including friction reducing additive or a gas, such as an inert gas, such as nitrogen or atmospheric air.

3. The power plant according to any of the claims 1 or 2, wherein said pressurised fluid is in a closed system including a return pump for returning said pressurised fluid from said pressure driven electrical power generator or a open system wherein said pressurised fluid is delivered to said surroundings from said pressure driven electrical power generator.

4. The power plant according to any of the claims 1-3, wherein each of said shafts of said windmills is a horizontal or vertical shaft.

5. The power plant according to any of the claims 1-4, wherein said fluid pressure generator is a slow-moving displacement pump, preferably a membrane-piston pump.

6. The power plant according to any of the claims 1-5, wherein said fluid pressure generator is coupled to said shaft via a gear means having a conical output stage, so that said output shaft co-insides with said shaft through the nacelle of said windmill, and being a multi-step centrifugal pump or screw pump or Archimedean screw.

7. The power plant according to any of the claims 1-6, wherein said fluid pressure generator includes a valve, said valve in a closed state functioning as a break for said windmill.

8. The power plant according to any of the claims 1-7, wherein said pressure accumulating reservoir is placed in or on a central platform with said pressure driven electrical power generator.

9. The power plant according to any of the claims 1-8, further including a multitude of pressure reservoirs positioned at one or more windmills.

10. The power plant according to any of the claims 1-9, wherein said pressure reservoir is constituted by at least two pressure reservoirs in a series or parallel connection.

11. The power plant according to any of the claims 9 or 10, wherein each of said multitude of pressure reservoirs is integral with said windmill and in said form of a hydrophore in said body of said mill tower or said foundation of said windmill.

12. The power plant according to any of the claims 1-11, wherein pressure driven electrical generator is controlled with regulated number of revolutions for sustaining synchronism with said electrical grid.

13. The power plant according to any of the claims 1-12, wherein said pressure accumulating reservoir is further connected to at least one fluid pressure generator being coupled to wave power plants or water turbine plants.

14. A windmill for use in a power plant according to any of the claims 1-13, wherein said windmill includes a mill tower, a rotor with a shaft being rotatably journalled in said mill tower, a fluid pressure generator mounted in said mill tower and being coupled to and driven by said shaft for delivering pressurised fluid via a pressure channel.

15. The windmill according to claim 14, wherein said windmill further includes any of the features of any of the claims 2-3.

16. A method of producing electrical power from wind energy, comprising:
i) providing at least one windmill including a mill tower, a rotor with a shaft being rotatably journalled in said mill tower, a fluid pressure generator mounted in said mill tower and being coupled to and driven by said shaft for delivering pressurised fluid via a pressure channel, said wind energy driving said rotor,
ii) providing an electrical power generator communicating with said pressure channel,
iii) driving said electrical power generator with said pressurised fluid for the generation of electrical power,
iv) delivering said electrical power to an electrical power supply grid or an electrical power storage.

17. The method according to claim 16, further comprising intermediate steps after step ii):
a) providing a storage device for storing said pressurised fluid under pressure, said storage device in communication with said pressure channels and said electrical power generator, and
b) delivering said pressurised fluid to said electrical power generator.

18. The method according to claim 17, further comprising a step of providing a monitoring means for monitoring demand for electrical power on said electrical power supply grid,
performing said step b) when said monitoring means detect a specific need in said electrical power supply grid.

19. Said method according to any of the claims 16-18, wherein said at least one windmill includes any of the features of any of the claims 2-13.
